# NEUE EUROPÄISCHE PATENTSCHRIFT

(11) **EP 3 793 871 B2**
(45) Veröffentlichungstag und Bekanntmachung des Hinweises auf die Entscheidung über den Einspruch: **19.11.2025**
(45) Hinweis auf die Patenterteilung: 25.01.2023
(21) Anmeldenummer: 19725658.9
(22) Anmeldetag: 13.05.2019
(51) Int. Cl.: B60T 8/1755

(54) **SYSTEM FÜR EIN ELEKTRISCH ANGETRIEBENES FAHRZEUG SOWIE FAHRZEUG DAMIT**
SYSTEM FOR AN ELECTRICALLY DRIVEN VEHICLE, VEHICLE HAVING SAME
SYSTÈME POUR VÉHICULE À PROPULSION ÉLECTRIQUE, VÉHICULE ÉQUIPÉ DE CE SYSTÈME

(30) Priorität: 15.05.2018 DE 102018111682
(43) Veröffentlichungstag der Anmeldung: 24.03.2021
(73) Patentinhaber: ZF CV Systems Europe BV, 1170 Brussels (BE)
(72) Erfinder: SCHÜNEMANN, Gerd, 30880 Laatzen (DE); HESEDING, Johannes, 30169 Hannover (DE)
(74) Vertreter: Pavant Patentanwälte PartGmbB
(86) Internationale Anmeldenummer: PCT/EP2019/062128
(87) Internationale Veröffentlichungsnummer: WO 2019/219558

(56) Entgegenhaltungen:
- EP-A1- 3 031 663
- DE-A1- 102009 030 816
- DE-A1- 19 918 995
- JP-A- 2014 118 072
- JP-A- 2018 074 257
- US-A- 5 615 933
- US-A1- 2017 106 755
- US-A1- 2017 334 437
- US-A1- 2017 355 373
- US-B1- 7 281 770

## Beschreibung

Die Erfindung betrifft den Bereich von Fahrzeugen, die elektrisch oder hybridangetrieben sind. Insbesondere umfassen derartige Fahrzeuge Nutzfahrzeuge, wie Lastkraftwagen, Personenkraftwagen oder Anhängerfahrzeuge. Elektrisch angetriebene Fahrzeuge, insbesondere im Bereich von Nutzfahrzeugen, sind seit langem mit einem Verbrennungsmotor als Antrieb bekannt. Derartige Fahrzeuge sind häufig zu Hybridfahrzeugen weiterentwickelt worden oder es ist der Verbrennungsmotor bei der Weiterentwicklung im Wesentlichen durch einen elektrischen Antrieb ersetzt worden. Das heißt, dass häufig keine komplette Neuentwicklung zum Bereitstellen elektrisch angetriebener Fahrzeuge stattgefunden hat, sodass bestehende Funktionen, die primär nicht mit dem Antrieb selbst zusammenhängen, weiterverwendet werden können.

Bei bekannten Fahrzeugen, insbesondere Nutzfahrzeugen, die elektrisch angetrieben sind, ist es daher vorgesehen, dass der elektrische Antrieb im Wesentlichen eingesetzt wird, um eine positive Beschleunigung des Fahrzeugs zu ermöglichen oder diese zu unterstützen. Derartige Fahrzeuge weisen üblicherweise ein Fahrzeugsteuergerät auf. Das Fahrzeugsteuergerät ist mit einem Elektromotorsteuergerät über eine Busverbindung verbunden und übergibt somit einen Beschleunigungswunsch, der beispielsweise durch eine Gaspedalstellung von einem Fahrer vorgegeben wird, an das Elektromotorsteuergerät. Dieses schaltet dann den elektrischen Antrieb zur Drehmomentbereitstellung durch die elektrischen Motoren oder zur Unterstützung der Drehmomentbereitstellung entsprechend der Vorgaben vom Fahrzeugsteuergerät an.

Außerdem wird vom Fahrzeugsteuergerät ein elektronisch geregeltes Bremssystem (EBS) des Fahrzeugs angesteuert. Hierzu wird dem Bremssystem, das auch als Bremssteuergerät bezeichnet werden kann, ein Signal mit einem negativen Beschleunigungswunsch, also ein gewünschtes Bremsen, gesendet und dieses Signal über die Reibbremsen, die vom Bremssteuergerät angesteuert werden, umgesetzt. Ein Signal mit einem negativen Beschleunigungswunsch wird beispielsweise im Fahrzeugsteuergerät erzeugt, wenn zum Beispiel über eine Bremspedalstellung von einem Fahrer ein Bremsen gewünscht wird.

Außerdem ist bekannt, dass das Fahrzeugsteuergerät im Falle eines vorhandenen elektrischen Antriebs zur Unterstützung bei einem Bremsen auch dem Elektromotorsteuergerät den Bremswunsch signalisiert, um eine Bremsung durch einen elektromagnetischen Bremsbetrieb des elektrischen Antriebs zu unterstützen. Hierdurch kann elektrische Energie beim Bremsmanöver, das mit dem elektrischen Antrieb durchgeführt wird, durch zurückgewonnene kinetische Energie erzeugt werden.

Gemäß dem Stand der Technik werden schnelle Beschleunigungs- oder Drehmomentänderungen, die beispielsweise im Falle einer Schlupf- oder Stabilitätsregelung nötig sind, vom elektronisch geregelten Bremssystem selbst ausgeführt und hierbei nur die Reibbremsen verwendet. Insbesondere radindividuelle Eingriffsmöglichkeiten, die beispielsweise im Falle einer Schlupf- oder Stabilitätsregelung vorteilhafterweise durch radindividuell angetriebene elektrische Motoren möglich sind, sowie eine Energierückgewinnung im Falle einer Schlupf- oder Stabilitätsregelung durch einen elektromagnetischen Bremsbetrieb elektrischer Motoren erfolgen demnach nicht. Dies wäre jedoch wünschenswert, um die Energieeffizienz sowie eine Verbesserung der Schlupf- oder Stabilitätsregelung zu ermöglichen.

EP 3 031 663 A1 offenbart eine Antriebskraftsteuer- und/oder -regelvorrichtung zur Stabilisierung eines Fahrzeugverhaltens eines elektrisch angetriebenen Fahrzeugs, indem ein Antriebsmoment eines Antriebsrads gesteuert und/oder geregelt wird. Indem ein Antriebsmoment oder Bremsmoment für das Antriebsrad erzeugt wird, wird ein Schlupfzustand des Antriebsrads unterdrückt. Die Antriebskraftsteuer- und/oder -regelvorrichtung weist eine Bremssteuer- und/oder Regeleinheit und einen elektrischen Motor mit einer Motorsteuer- und/oder Regeleinheit auf, die jeweils an einen CAN-Bus angeschlossen sind.

Aufgabe der vorliegenden Erfindung ist es demnach, eine Möglichkeit zu finden, auch einen elektrischen Antrieb bei der hochdynamischen Stellung positiven und negativen Drehmoments zur Schlupf- und Stabilitätsregelung zu verwenden, um insbesondere auch die hohe Drehmomentdynamik von elektrischen Antrieben zur verbesserten Schlupf- und Stabilitätsregelung nutzen zu können.

Hierzu betrifft die Erfindung ein System für ein elektrisch angetriebenes Fahrzeug. Das System umfasst mindestens ein Motorsteuergerät und mindestens ein Bremssteuergerät. Das Motorsteuergerät dient zum Ansteuern mehrerer elektrischer Motoren, mit denen mindestens ein Antriebsrad des Fahrzeugs antreibbar ist.

Das Bremssteuergerät dient zum Ansteuern von Reibbremsen, mit denen jeweils eines von mehreren Antriebsrädern und zusätzlich oder alternativ jeweils eines von mehreren antriebslosen Rädern bremsbar sind. Das Bremssteuergerät und das Elektromotorsteuergerät weisen jeweils eine erste Datenschnittstelle auf. Die erste Datenschnittstelle ist eine Busschnittstelle. Die Busschnittstelle ist eine CAN-Busschnittstelle, die auch als CAN-Bus-Interface bezeichnet werden kann. Das Bremssteuergerät und das Elektromotorsteuergerät sind außerdem eingerichtet, über die erste Datenschnittstelle Daten auszutauschen. Die erste Datenschnittstelle weist eine vordefinierte maximale Datenübertragungsrate auf. Die vordefinierte maximale Datenübertragungsrate, die auch Datentransferrate, Datenrate oder Übertragungsgeschwindigkeit genannt werden kann, bezeichnet eine digitale Datenmenge, die innerhalb einer Zeitspanne über einen Übertragungskanal, nämlich eine Busverbindung mittels der Datenschnittstelle, übertragbar ist. Die maximale Datenübertragungsrate kann auch Kanalkapazität genannt werden. Insbesondere ergibt sich im vorliegenden Fall die vordefinierte maximale Datenübertragungsrate durch die Verwendung der Datenschnittstelle als Busschnittstelle mit einem standardisierten Protokoll, wie vorzugsweise einem CAN-Protokoll.

Außerdem umfassen das Bremssteuergerät und das Elektromotorsteuergerät erfindungsgemäß jeweils eine zweite Datenschnittstelle. Die zweite Datenschnittstelle ist jeweils ausgebildet, Daten mit einer höheren Datenübertragungsrate als der maximalen Datenübertragungsrate der ersten Datenschnittstelle auszusenden und/oder zu empfangen. Somit sind das Bremssteuergerät und das Elektromotorsteuergerät eingerichtet, über die zweite Datenschnittstelle Daten miteinander auszutauschen, wobei dies mit einer höheren Datenübertragungsrate ausführbar ist, als die vordefinierte maximale Datenübertragungsrate, mit der ein Datenaustausch mittels der ersten Datenschnittstelle ausführbar ist.

Hierdurch ist es möglich, dass eine Ansteuerung des Elektromotorsteuergeräts sowie des Bremssteuergeräts durch ein Fahrzeugsteuergerät mit einem Bussystem über die jeweils erste Datenschnittstelle möglich ist, um beispielsweise einen positiven oder negativen Beschleunigungswunsch eines Fahrers an eines oder beide der Steuergeräte zu übertragen, sodass diese entsprechend zum Beschleunigen oder Abbremsen des Fahrzeugs verwendet werden können. Insbesondere können auch das Bremssteuergerät und das Elektromotorsteuergerät über die erste Datenschnittstelle Daten austauschen. Beispielsweise ein Bremswunsch eines Fahrers, der an das Bremssteuergerät vom Fahrzeugsteuergerät über die erste Datenschnittstelle übergeben wurde, kann demnach durch Anforderung vom Bremssteuergerät über die erste Datenschnittstelle an das Elektromotorsteuergerät zu einer Unterstützung der Bremsung durch einen Bremsbetrieb der elektrischen Motoren, die durch das Elektromotorsteuergerät ansteuerbar sind, unterstützt werden.

Darüber hinaus weist jedoch das erfindungsgemäße System ein Motorsteuergerät und ein Bremssteuergerät mit jeweils einer zweiten Datenschnittstelle auf, die eine vergleichsweise höhere Datenübertragungsrate als die erste Datenschnittstelle und somit einen Datenaustausch zwischen den Steuergeräten mit einer höheren Datenübertragungsrate ermöglichen, als mit der ersten Datenschnittstelle. Hochdynamische Drehmomentänderungswünsche eines elektrisch angetriebenen Motors können somit vom Bremssteuergerät zentral erzeugt und direkt an das Elektromotorsteuergerät übergeben werden. Eine Einbeziehung der elektrischen Motoren bei hochdynamischen Drehmomentänderungen wird hierdurch ermöglicht. Ein weiterer Vorteil ist, dass über zwei Datenverbindungen auch redundant Daten zwischen dem Elektromotorsteuergerät und dem Motorsteuergerät ausgetauscht werden können, sodass die Sicherheit erhöht wird.

Das Motorsteuergerät ist eingerichtet, mehrere elektrische Motoren eines elektrisch angetriebenen Fahrzeugs, mit denen jeweils eines von mehreren Antriebsrädern des Fahrzeugs antreibbar ist, anzusteuern. Radindividuelle Antriebe eines Fahrzeugs, die durch das oder mehrere Motorsteuergeräte individuell ansteuerbar sind, können somit über die zweite Datenschnittstelle und somit eine zweite Datenverbindung zwischen Motorsteuergerät und Bremssteuergerät verwendet werden, um die elektrischen Motoren radindividuell zur Unterstützung unterschiedlicher Fahrsituationen hinzuziehen zu können. Eine wesentliche Verbesserung insbesondere eines radindividuellen Antriebs im Falle durch das Bremssteuergerät ausgelöster Drehmomentsanforderungswünsche in außergewöhnlichen Fahrsituationen sind daher möglich, sodass die Fahrsicherheit verbessert wird.

Gemäß einer weiteren Ausführungsform ist das Motorsteuergerät eingerichtet, vorzugsweise kontinuierlich oder intervallweise, einen maximal aktuell verfügbaren positiven und/oder negativen Drehmomentwert jedes der elektrischen Motoren, die mit dem Motorsteuergerät ansteuerbar sind, zu bestimmen und über die zweite Datenschnittstelle an das Bremssteuergerät zu übertragen. Somit steht einem Bremssteuergerät, dem üblicherweise ohnehin ein radindividuelles aktuelles Solldrehmoment, beispielsweise von einem Fahrzeugsteuergerät, vorgegeben wird, auch eine weitere Information über maximal aktuell verfügbare positive oder negative Drehmomentwerte jedes der elektrischen Motoren zur Verfügung. So kann das Bremssteuergerät im Falle einer Ansteuerung der elektrischen Motoren mittels des Motorsteuergeräts Maximalwerte zur Ansteuerung des Motorsteuergeräts einerseits bei Erzeugung der Steuersignale für das Motorsteuergerät und andererseits für die Erzeugung von Steuersignalen zur Ansteuerung der Reibbremsen berücksichtigen. Maximal verfügbare positive oder negative Drehmomentwerte jedes der elektrischen Motoren, also in einer konkreten Fahrsituation realisierbare maximale Drehmomentwerte, hängen dabei von der Drehzahl, also der Fahrzeuggeschwindigkeit, dem Ladezustand einer die elektrischen Motoren antreibenden Batterie und der Komponententemperaturen eines die elektrischen Motoren umfassenden elektrischen Antriebs ab. Diese Zustandsgrößen werden im Elektromotorsteuergerät unter Berücksichtigung bekannter Elektromotormaschinenparameter für die Regelung der elektrischen Motoren und weiterer Messwerte berechnet. Derartige Messwerte sind beispielsweise Motorposition, Phasenstrom von mindestens zwei Phasen und/oder die Phasenspannung.

Gemäß einer weiteren Ausführungsform weist das Bremssteuergerät mindestens ein Sicherheitssystem auf, das eingerichtet ist, insbesondere bei einer Aktivierung des Sicherheitssystems, für mindestens eines der Räder des Fahrzeugs oder alle Räder des Fahrzeugs jeweils Solldrehmomente zu erzeugen.

Außerdem ist das Bremssteuergerät eingerichtet, aus den Solldrehmomenten für jeden der elektrischen Motoren jeweils Differenzdrehmomente abzuleiten. Demnach erzeugt das Bremssteuergerät, insbesondere bei Aktivierung des Sicherheitssystems, nicht nur für Reibbremsen des Fahrzeugs Ansteuersignale, sondern auch für die elektrischen Motoren. Diese werden als Differenzdrehmomente bezeichnet. Vorzugsweise sind diese Differenzdrehmomente als Differenzdrehmomente zwischen einem aktuellen Drehmoment eines elektrischen Motors sowie einem gewünschten höheren oder geringeren Drehmoment des Motors zu verstehen. Insbesondere bei dem Ausführen einer Sicherheitsfunktion durch das Sicherheitssystem des Bremssteuergeräts werden somit direkt im Bremssteuergerät Drehmomentänderungen der elektrischen Motoren durch das Bremssteuergerät generiert und können dank schneller Übertragung über die zweiten Datenschnittstellen vom Motorsteuergerät zur Änderung der Ansteuerung der elektrischen Motoren verwendet werden. Eine erhöhte Sicherheit in kritischen Fahrsituationen, bei denen ein Sicherheitssystem aktiviert wird, erfolgt durch das hochdynamische Zuschalten von elektrischen Motoren. Außerdem ist auch eine Effizienzsteigerung möglich, da insbesondere auch im Falle von mit einem Sicherheitssystem ausgeführten Funktionen elektrische Energie durch generatorisches Bremsen der elektrischen Motoren erzeugt werden kann.

Gemäß einer weiteren Ausführungsform umfasst das Sicherheitssystem des Bremssteuergeräts eine Antriebsschlupfregelung und/oder ein Antiblockiersystem und/oder ein elektronisches Stabilitätsprogramm. Die Antriebsschlupfregelung (ASR) kann auch automatische Schlupfregelung oder Traktionskontrolle genannt werden. Die Antriebsschlupfregelung sorgt dafür, dass die Räder beim Anfahren oder bei schlechtem Untergrund nicht durchdrehen. Droht somit ein Schlupf der Antriebsräder, wird das Antriebsmoment vorzugsweise durch gezieltes Zurücknehmen des Antriebsmoments und optional zusätzliches, vorzugsweise radindividuelles, Bremsen reguliert. Das Antiblockiersystem (ABS) wird teilweise auch als automatischer Blockierverhinderer (ABV) bezeichnet. Das Antiblockiersystem wirkt beim Bremsen einem möglichen Blockieren der Räder insbesondere durch Reduzieren des Bremsdrucks der Reibbremsen entgegen, sodass eine bessere Lenkbarkeit oder Spurtreue erfolgt. Zudem kann hierdurch der Radschlupf reguliert werden, sodass auf beispielsweise nasser Straße ein Bremsweg verkürzt werden kann. Das ABS regelt den Radschlupf so, dass die maximale Kraft zwischen Rad und Straße ausgetauscht werden kann. Dadurch wird dann der Bremsweg geringer. Die Fahrdynamikregelung, die auch als Electronic Stability Control (ESC) oder häufig elektronisches Stabilitätsprogramm (ESP) bezeichnet wird, dient, um durch gezieltes Abbremsen ein Ausbrechen des Fahrzeugs entgegenwirken.

Vorzugsweise sind gemäß dieser Ausführungsform alle der genannten Sicherheitssysteme im Bremssteuergerät integriert und dank der erfindungsgemäßen zweiten Datenschnittstelle können diese Sicherheitssysteme durch Erzeugen der Differenzdrehmomente für die elektrischen Motoren zusätzlich zum Erzeugen einer Bremskraft mit den Reibbremsen Drehmomentänderungen an den Antriebsrädern mittels Ansteuerung der elektrischen Motoren erzeugen.

Eine Verbesserung der Sicherheit und eine Verbesserung der Regelgenauigkeit sowie der Regelgeschwindigkeiten ist somit möglich.

Gemäß einer weiteren Ausführungsform ist das Bremssteuergerät eingerichtet, die Differenzdrehmomente für jeden der elektrischen Motoren in Abhängigkeit der jeweiligen Maximalwerte des aktuell verfügbaren positiven und/oder negativen Drehmoments des jeweiligen Motors zu begrenzen.

Demnach dienen also die dem Bremssteuergerät zuvor zugeführten Maximalwerte des verfügbaren Drehmoments zur Begrenzung der Differenzdrehmomente, die im Bremssteuergerät erzeugt werden, sodass direkt im Bremssteuergerät berücksichtigt werden kann, in welchem Maß die elektrischen Motoren Einfluss auf eine Beschleunigungsveränderung, insbesondere im Falle eines Eingriffs durch das Sicherheitssystem, haben können. Entsprechend können dann auch die Reibbremsen ergänzend angesteuert werden. Somit wird sichergestellt, dass das Bremssteuergerät nie eine größere Drehmomentänderung von den elektrischen Motoren erwartet und bei einem Eingriff berücksichtigt, als sie tatsächlich von den elektrischen Motoren zur Verfügung gestellt werden kann.

Gemäß einer weiteren Ausführungsform ist das Bremssteuergerät eingerichtet, Differenzdrehmomente mit negativem Drehmomentwert oder positivem Drehmomentwert zu erzeugen. Somit wird dem Bremssteuergerät ermöglicht, insbesondere im Falle einer Sicherheitsfunktion, die durch ein Sicherheitssystem ausgeführt wird, nicht nur bremsend auf das vorhandene auf die Räder ausgeübte Drehmoment einzuwirken, sondern auch beschleunigend. Dies kann insbesondere beim Ausführen eines elektronischen Stabilitätsprogramms dazu führen, dass eine Fahrsicherheit des Fahrzeugs verbessert wird. Insbesondere beim Einsatz mehrerer elektrischer Motoren ist somit nicht nur eine radindividuelle Einbremsung, sondern auch eine radindividuelle Beschleunigung zur Unterstützung der Fahrsicherheit möglich.

Gemäß einer weiteren Ausführungsform ist das Bremssteuergerät eingerichtet, im Fall eines begrenzten Differenzdrehmoments für den oder jeden der elektrischen Motoren Bremsdrehmomente für die Ansteuerung der Reibbremsen der jeweiligen Antriebsräder zu erzeugen. Ein Bremsdrehmoment für ein Antriebsrad umfasst hierbei vorzugsweise eine Differenz zwischen dem Solldrehmoment für das Antriebsrad und dem begrenzten Differenzdrehmoment für den elektrischen Motor des Antriebsrads. Insbesondere, wenn also ein Antriebsrad eingebremst werden soll, wird zunächst ein Differenzdrehmoment für den elektrischen Motor des Rades basierend auf dem vom Bremssteuergerät berechneten Solldrehmoment und dem maximal möglichen Drehmoment des Motors bestimmt. Ist der bestimmte Wert gleich dem Maximalwert, so ist hieran erkennbar, dass ein maximales Bremsmoment des Motors verwendet wird, darüber hinaus aber noch ein größeres Bremsmoment benötigt wird. Ein entsprechendes Bremsdrehmoment wird dann durch Bilden der Differenz für die Reibbremsen erzeugt und die entsprechende Reibbremse somit vom Bremssteuergerät mit diesem Differenzwert angesteuert.

Zum Bremsen werden somit priorisiert die Antriebsräder zunächst so stark wie möglich durch den Motor eingebremst und erst daraufhin die Reibbremsen zur Unterstützung der Bremsung verwendet. Somit ist immer eine ausreichende Bremsung unter maximaler Energierückgewinnung mit den elektrischen Motoren möglich.

Das Bremssteuergerät ist eingerichtet, die Differenzdrehmomente über die zweite Datenschnittstelle an das Elektromotorsteuergerät zu übertragen. Das Elektromotorsteuergerät ist außerdem eingerichtet, die über die zweite Datenschnittstelle empfangenen Differenzdrehmomente aktuellen Drehmomentsollwerten, die vorzugsweise über die erste Datenschnittstelle von einem Fahrzeugsteuergerät empfangbar sind, zu überlagern. Das Elektromotorsteuergerät ist demnach derart ausgebildet, um nicht nur von einem Fahrzeugsteuergerät vorgegebene Drehmomentsollwerte bei der Ansteuerung mehrerer der Elektromotoren zu berücksichtigen, sondern auch die Differenzdrehmomente, die im Bremssteuergerät erzeugt werden.

Gemäß einer weiteren Ausführungsform weist das Elektromotorsteuergerät ein Überlagerungsglied, das vorzugsweise ein Addierglied ist, auf, um die Differenzmomente für jeden der elektrischen Motoren dem oder dem jeweiligen aktuellen Drehmomentsollwert für den jeweiligen elektrischen Motor, insbesondere durch Aufaddieren, zu überlagern. Eine einfache Realisierung einer Überlagerung ist insbesondere durch Addition möglich. ]

Ein schneller Datenaustausch ist somit nur zwischen dem Bremssteuergerät und dem Motorsteuergerät nötig, sodass eine Ergänzung einer zweiten Datenschnittstelle für weitere Steuergeräte, insbesondere für das Fahrzeugsteuergerät, nicht nötig ist. Außerdem muss das Fahrzeugsteuergerät bei dem Auslösen von Sicherheitsmaßnahmen nicht hinzugezogen werden, sodass eine Veränderung der Funktionalität des Fahrzeugsteuergeräts nicht nötig ist, um das vorliegende System in ein Fahrzeug zu integrieren.

Außerdem betrifft die Erfindung ein Fahrzeug, das insbesondere ein Nutzfahrzeug, wie ein Lastkraftwagen ist. Das Fahrzeug umfasst ein System nach einer der vorgenannten Ausführungsformen.

Gemäß einer besonderen Ausführungsform des Fahrzeugs umfasst das Fahrzeug ein Fahrzeugsteuergerät, das eine erste Datenschnittstelle umfasst, die eine Busschnittstelle ist. Die Busschnittstelle ist eine CAN-Busschnittstelle, die auch CAN-Bus-Interface genannt wird. Außerdem ist das Fahrzeugsteuergerät eingerichtet, Drehmomentsollwerte an das Elektromotorsteuergerät über die erste Datenschnittstelle des Fahrzeugsteuergeräts an die erste Datenschnittstelle des Elektromotorsteuergeräts zu senden. Ferner ist das Fahrzeugsteuergerät eingerichtet, Drehmomentsollwerte an das Bremssteuergerät über die erste Datenschnittstelle des Fahrzeugsteuergeräts an die erste Datenschnittstelle des Bremssteuergeräts zu senden.

Gemäß einer weiteren Ausführungsform des Fahrzeugs umfasst dieses mehrere angetriebene Räder, die jeweils einen elektrischen Motor aufweisen, der jeweils individuell mit einem individuellen Drehmoment von einem oder jeweils einem Elektromotorsteuergerät betreibbar ist.

Weitere Ausführungsformen ergeben sich anhand der in den Figuren näher erläuterten Ausführungsbeispiele. Hierbei zeigt
- Fig. 1: ein Ausführungsbeispiel des Systems,
- Fig. 2: ein Ausführungsbeispiel des Fahrzeugs und
- Fig. 3: ein Ausführungsbeispiel eines nicht beanspruchten Verfahrens.

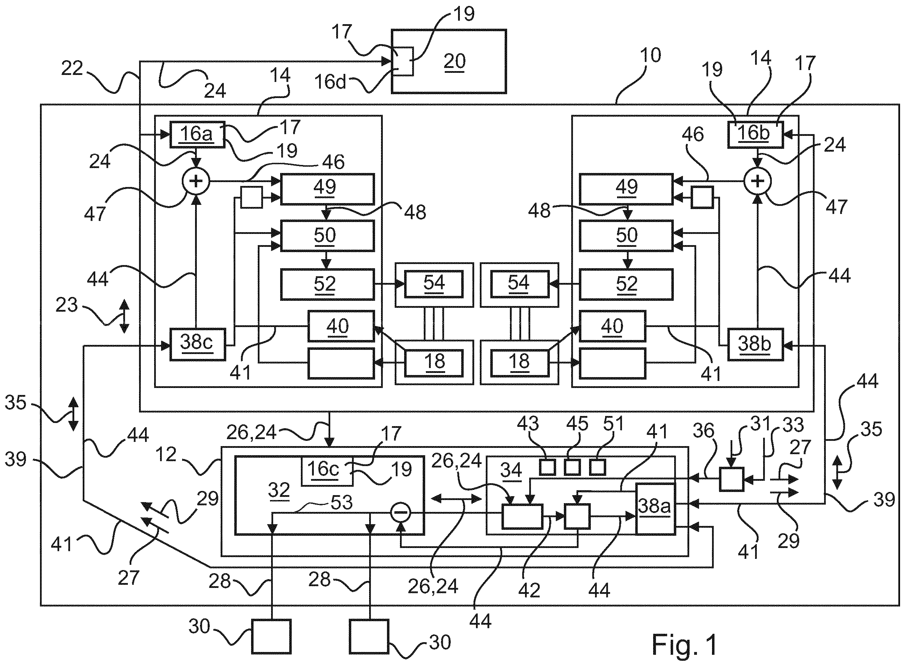

Fig. 1 zeigt ein System 10 gemäß einem Ausführungsbeispiel der Erfindung. Das System 10 umfasst ein Bremssteuergerät 12 und zwei Motorsteuergeräte 14. Das Bremssteuergerät 12 sowie die Motorsteuergeräte 14 weisen jeweils eine erste Datenschnittstelle 16a, 16b, 16c auf. Die erste Datenschnittstelle 16a, 16b, 16c ist eine Busschnittstelle 17, insbesondere eine CAN-Busschnittstelle 19, und kann daher auch als CAN-Bus-Interface bezeichnet werden. Die Motorsteuergeräte 14 dienen jeweils zum Ansteuern eines elektrischen Motors 18. Mit den elektrischen Motoren 18 ist jeweils ein

Antriebsrad eines Fahrzeugs antreibbar. Vorliegend sind gemäß diesem Ausführungsbeispiel zwei Motorsteuergeräte dargestellt, die jeweils einen elektrischen Motor 18 ansteuern, wobei gemäß einem anderen Ausführungsbeispiel der Erfindung, das hier nicht dargestellt ist, auch ein einzelnes Motorsteuergerät 14 zum Ansteuern mehrerer elektrischer Motoren 18 vorgesehen ist. Außerdem ist ein Fahrzeugsteuergerät 20 dargestellt, das ebenfalls eine erste Datenschnittstelle 16d aufweist. Das Fahrzeugsteuergerät 20 ist eingerichtet, Drehmomentsollwerte 24 für die elektrischen Motoren 18 an die Motorsteuergeräte 14 über eine Busverbindung 22 und die ersten Datenschnittstellen 16a, 16b, 16d zu übertragen. Die Busverbindung weist eine vordefinierte maximale Datenübertragungsrate 23 auf.

Außerdem ist das Fahrzeugsteuergerät 20 eingerichtet, einen negativen Beschleunigungswunsch 26, also einen Bremswunsch, an das Bremssteuergerät 12 zu übertragen. Im Falle eines vom Fahrzeugsteuergerät 20 vorgegebenen negativen Beschleunigungswunsches 26 erzeugt das Bremssteuergerät 12 Bremsdrehmomente 28 für Reibbremsen 30 des Fahrzeugs. Dies erfolgt mit einem ersten Funktionsblock 32 des Bremssteuergeräts 12. Ein zweiter Funktionsblock, der hier als Sicherheitssystem 34 bezeichnet wird, des Bremssteuergeräts 12 empfängt diesen negativen Beschleunigungswunsch 26 ebenfalls, wobei diesem Funktionsblock 34 zusätzlich ein Schlupf oder ein Schlupfsignal 36 eines oder mehrerer der Räder des Fahrzeugs zugeführt wird. Das Schlupfsignal 36 wird gemäß einem alternativen Ausführungsbeispiel im Bremssteuergerät 12 selbst berechnet oder bestimmt. Das Bremssteuergerät 12 oder, wie hier dargestellt, ein anderer Funktionsblock empfängt Schlupfwerte 31 für jedes der Räder. Dies erfolgt durch Messen oder Berechnen der Fahrzeuggeschwindigkeit und der Raddrehzahl. Die Schlupfwerte 31 werden mit mindestens einem vordefinierten Schwellenwert 33 verglichen. Beispielsweise beim Überschreiten des Schwellenwerts 33 durch einen Schlupfwert 31 wird das Schlupfsignal 36 erzeugt.

Das Bremssteuergerät 12 weist außerdem eine zweite Datenschnittstelle 38a auf, die mit zweiten Datenschnittstellen 38b, 38c der Motorsteuergeräte 14 über eine Datenleitung 39 verbunden ist. Die Datenleitung 39, mit der die zweiten Datenschnittstellen 38a-38c verbunden sind, weist eine Datenübertragungsrate 35 auf, die höher als die maximale Datenübertragungsrate 23 der Busverbindung 22 ist, mit der die ersten Datenschnittstellen 16a-16c verbunden sind. Über die zweite Datenschnittstelle 38a empfängt das Bremssteuergerät 12 kontinuierlich oder intervallweise von dem jeweiligen Motorsteuergerät 14 über eine Sensorschnittstelle 40 bereitgestellte maximale verfügbare positive oder negative Drehmomentwerte 41 der entsprechend mit den Motorsteuergeräten 14 verbundenen elektrischen Motoren 18.

Im Falle eines auftretenden Schlupfsignals 36 wird das Sicherheitssystem 34 im Bremssteuergerät 12 aktiviert und Solldrehmomente 42 für jedes Rad des Fahrzeugs erzeugt. Diese Solldrehmomente 42 werden unter Berücksichtigung der maximalen aktuell verfügbaren positiven oder negativen Drehmomentwerte 41 in Differenzdrehmomente 44 umgewandelt, die über die zweiten Datenschnittstellen 38a jeweils den entsprechenden Datenschnittstellen 38b, 38c der Motorsteuergeräte 14 zugeführt werden. Die Differenzdrehmomente 44 können positive Drehmomentwerte 27 oder negative Drehmomentwerte 29 umfassen. Die Differenzdrehmomentwerte 44 werden, den Drehmomentsollwerten 24 entsprechend, die im jeweiligen Motorsteuergerät 14 jeweils vorliegen, überlagert und hierdurch ein Drehmomentvorgabewert 46 bestimmt. Dies erfolgt durch ein Überlagerungsglied 47, das hier ein Addierglied 47 ist. In einem Wandler 49 wird aus dem Drehmomentvorgabewert 46 ein Signal 48 zum Ansteuern eines pulsweiten Modulators 50 erzeugt, der dadurch eine Pulsweitenmodulation 52 erzeugt, um somit mit Wechselrichtern 54 eine Wechselspannung für die elektrischen Motoren 18 bereitzustellen. Außerdem werden aus jeweils jedem der Solldrehmomente 42 und dem jeweiligen Differenzdrehmomentwert 44 für einen elektrischen Motor 18 Differenzen 53, also Differenzwerte, gebildet, um Bremsdrehmomente 28 für die Reibbremsen 30 zu erzeugen.

Das Sicherheitssystem 34 kann somit direkt in die Steuerung der elektrischen Motoren 18 eingreifen. Vorzugsweise umfasst das Sicherheitssystem 34 eine Antriebsschlupfregelung 43, ein Antiblockiersystem 45 und ein elektronisches Stabilitätsprogramm 51.

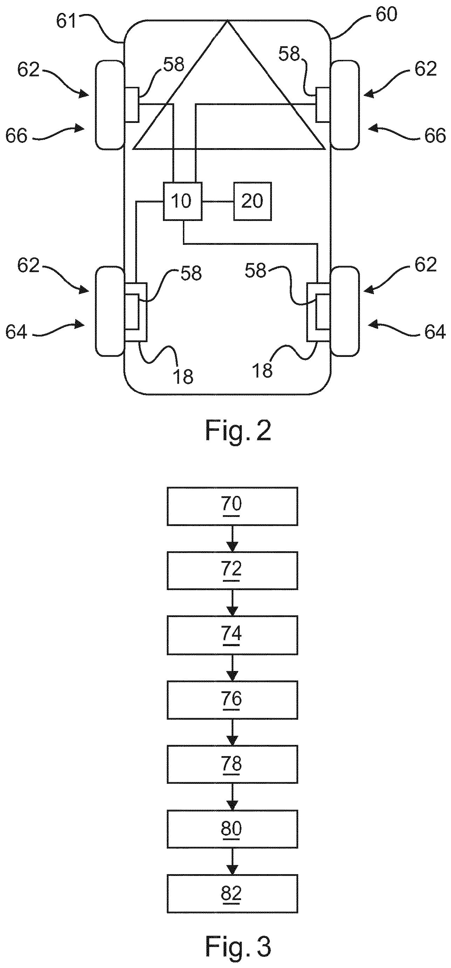

Fig. 2 zeigt ein Ausführungsbeispiel eines Fahrzeugs 60, das vier Räder 62 aufweist. Das Fahrzeug 60 ist hier ein Nutzfahrzeug 61. Zwei der Räder 62 sind Antriebsräder 64 und zwei der Räder 62 sind antriebslose Räder 66. Die Antriebsräder 64 weisen jeweils einen elektrischen Motor 18 auf. Jedes der Räder 62 weist zusätzlich eine Reibbremse 58 auf. Außerdem umfasst das Fahrzeug 60 ein System 10 und ein Fahrzeugsteuergerät 20.

Fig. 3 zeigt die Schritte eines nicht beanspruchten Verfahrens. In einem Schritt 70 berechnet ein Bremssteuergerät 12 ein Schlupfsignal 36, das den Schlupf 36 eines oder mehrerer Räder 62 des Fahrzeugs 60 anzeigt. Im Schritt 72 wird ein Sicherheitssystem 34 des Bremssteuergeräts 12 aktiviert und im Schritt 74 Solldrehmomente 42 für jedes der Räder 62 bestimmt. Im Schritt 76 werden aus den Solldrehmomenten 42 Differenzdrehmomente 44 für die elektrischen Motoren 18 der angetriebenen Räder 64 erzeugt, wobei hier im Schritt 78 die Differenzdrehmomente 44 über eine zweite Datenschnittstelle 38a des Bremssteuergeräts 12 an das Elektromotorsteuergerät 14 übertragen. Im Schritt 80 werden die Differenzdrehmomente 44 Drehmomentsollwerten 24 der entsprechenden elektrischen Motoren 18 überlagert und im Schritt 82 die elektrischen Motoren 18 mit den überlagerten Drehmomentsollwerten 24 jeweils angesteuert.

### Bezugszeichenliste (Bestandteil der Beschreibung)

- 10: System
- 12: Bremssteuergerät
- 14: Motorsteuergeräte
- 16a-16b: erste Datenschnittstelle des Motorsteuergeräts
- 16c: erste Datenschnittstelle des Bremssteuergeräts
- 16d: erste Datenschnittstelle des Fahrzeugsteuergeräts
- 17: Busschnittstelle
- 18: elektrischer Motor
- 19: CAN-Busschnittstelle
- 20: Fahrzeugsteuergerät
- 22: Busverbindung
- 23: Datenübertragungsrate
- 24: Drehmomentsollwerte
- 26: negativer Beschleunigungswunsch
- 27: positiver Drehmomentwert
- 28: Bremsdrehmomente
- 29: negativer Drehmomentwert
- 30: Reibbremsen
- 31: Schlupfwert
- 32: erster Funktionsblock
- 33: Schwellenwert
- 34: Sicherheitssystem
- 35: Datenübertragungsrate
- 36: Schlupfsignal
- 38a: zweite Datenschnittstelle des Bremssteuergeräts
- 38b-38c: zweite Datenschnittstellen des Motorsteuergeräts
- 39: Datenleitung
- 40: Sensorschnittstelle
- 41: maximal aktuell verfügbarer positiver oder negativer Drehmomentwert
- 42: Solldrehmomente
- 43: Antriebsschlupfregelung
- 44: Differenzdrehmomente
- 45: Antiblockiersystem
- 46: Drehmomentvorgabewert
- 47: Überlagerungsglied
- 48: Signal
- 49: Wandler
- 50: Modulator
- 51: elektronisches Stabilitätsprogramm
- 52: Pulsweitenmodulation
- 53: Differenzen
- 54: Wechselrichter
- 58: Reibbremse
- 60: Fahrzeug
- 61: Nutzfahrzeug
- 62: Räder
- 64: Antriebsräder
- 66: antriebslose Räder
- 70-82: Schritte des Verfahrens

## Patentansprüche

1. System (10) für ein elektrisch angetriebenes Fahrzeug (60), wobei das System (10) umfasst:
- mindestens ein Motorsteuergerät (14) zum Ansteuern mehrerer elektrischer Motoren (18), mit dem mindestens ein Antriebsrad (64) des Fahrzeugs (60) antreibbar ist und
- mindestens ein Bremssteuergerät (12) zum Ansteuern von Reibbremsen (58), mit denen jeweils eines von mehreren Antriebsrädern (64) und/oder antriebslosen Rädern (66) bremsbar sind,
wobei das Bremssteuergerät (12) und das Elektromotorsteuergerät (14) jeweils eine Datenschnittstelle (16a, 16b, 16c) aufweisen, die eine CAN-Busschnittstelle (19) ist, und das Bremssteuergerät (12) und das Elektromotorsteuergerät (14) eingerichtet sind, über die erste Datenschnittstelle (16a, 16b, 16c) Daten mit einer vordefinierten maximalen Datenübertragungsrate (23) auszusenden und/oder zu empfangen,
wobei das Bremssteuergerät (12) und das Elektromotorsteuergerät (14) jeweils eine zweite Datenschnittstelle (38a, 38b, 38c) aufweisen, wobei die zweite Datenschnittstelle (38a, 38b, 38c) jeweils ausgebildet ist, Daten mit einer höheren Datenübertragungsrate (35) als der maximalen Datenübertragungsrate (23) der ersten Datenschnittstelle (16a, 16b, 16c) auszusenden und/oder zu empfangen und
das Bremssteuergerät (12) und das Elektromotorsteuergerät (14) eingerichtet sind, über die zweiten Datenschnittstelle (38a, 38b, 38c) Daten mit einer höheren Datenübertragungsrate (35) als mit den ersten Datenschnittstellen (16a, 16b, 16c), insbesondere durch Aussenden und/oder Empfangen von Daten, untereinander auszutauschen,
**dadurch gekennzeichnet, dass** das Bremssteuergerät (12) eingerichtet ist, die Differenzdrehmomente (44) über seine zweite Datenschnittstelle (38a) an die zweite Datenschnittstelle (38b, 38c) des Elektromotorsteuergeräts (14) zu übertragen und das Elektromotorsteuergerät (14) eingerichtet ist, die über die zweite Datenschnittstelle (38b, 38c) von der zweiten Datenschnittstelle (38a) des Bremssteuergeräts (12) empfangenen Differenzdrehmomente (44) dem oder jeweils dem aktuellen Drehmomentsollwert (24) des jeweiligen elektrischen Motors (18), die über die erste Datenschnittstelle (16d) von einem Fahrzeugsteuergerät (20) empfangbar sind, zu überlagern.

2. System (10) nach Anspruch 1, wobei das mindestens eine Motorsteuergerät (14) eingerichtet ist, vorzugsweise kontinuierlich oder intervallweise, einen maximal aktuell verfügbaren positiven und/oder negativen Drehmomentwert (41) jedes der elektrischen Motoren (18) zu bestimmen und über die zweite Datenschnittstelle (38b, 38c) an die zweite Datenschnittstelle (38a) des Bremssteuergeräts (12) zu übertragen.

3. System (10) nach einem der vorhergehenden Ansprüche, wobei das Bremssteuergerät (12) mindestens ein Sicherheitssystem (34) umfasst, das eingerichtet ist, insbesondere bei einer Aktivierung (72) des Sicherheitssystems (34), für mindestens eines der Räder (62) des Fahrzeugs (60) oder alle Räder (62) des Fahrzeugs (60) jeweils Solldrehmomente (42) zu erzeugen, und das Bremssteuergerät (12) eingerichtet ist, aus den Solldrehmomenten (42) für jeden der elektrischen Motoren (18) jeweils Differenzdrehmomente (44) abzuleiten.

4. System (10) nach Anspruch 3, wobei das Sicherheitssystem (34) eine Antriebsschlupfregelung (43) und/oder ein Antiblockiersystem (45) und/oder ein elektronisches Stabilitätsprogramm (51) umfasst.

5. System (10) nach einem der vorhergehenden Ansprüche, wobei das Bremssteuergerät (12) eingerichtet ist, den oder die Differenzdrehmomente (44) für jeden der elektrischen Motoren (18) in Abhängigkeit des oder des jeweiligen maximalen aktuell verfügbaren positiven und/oder negativen Drehmomentwerts (41) zu begrenzen.

6. System (10) nach einem der vorhergehenden Ansprüche, wobei das Bremssteuergerät (12) eingerichtet ist, Differenzdrehmomente (44) mit negativem Drehmomentwert (29) oder positivem Drehmomentwert (27) zu erzeugen.

7. System (10) nach einem der vorhergehenden Ansprüche, wobei das Bremssteuergerät (12) eingerichtet ist, im Fall eines begrenzten Differenzdrehmoments (44) für jeden der elektrischen Motoren (18) Bremsdrehmomente (28) für die Ansteuerung der Reibbremsen (30) der Antriebsräder (64) zu erzeugen, wobei ein Bremsdrehmoment (28) für ein Antriebsrad (64) insbesondere aus einer Differenz (53) zwischen dem Solldrehmoment (42) für das jeweilige Antriebsrad (64) und dem begrenzten Differenzdrehmoment (44) für einen elektrischen Motor (18) des jeweiligen Antriebsrads (64) besteht.

8. System (10) nach einem der vorhergehenden Ansprüche, wobei das Elektromotorsteuergerät (14) ein Überlagerungsglied (47), insbesondere ein Addierglied (47), aufweist, wobei das Überlagerungsglied (47) eingerichtet ist, für die elektrischen Motoren (18) jeweils einen Differenzdrehmomentwert (44) mit einem Drehmomentsollwert (24), insbesondere durch Addieren, zu überlagern.

9. System (10) nach einem der vorhergehenden Ansprüche, wobei das Sicherheitssystem (34) eingerichtet ist, beim Erkennen eines Schlupfwertes (31) mindestens eines Rades (62) oberhalb einem vordefinierten Schwellenwert (33) zum Reduzieren des Schlupfwertes (31) ohne Interaktion mit einem Fahrzeugsteuergerät (20) oder weiteren Steuergeräten aktiviert zu werden.

10. Fahrzeug (60), insbesondere Nutzfahrzeug (61), wie ein Lastkraftwagen (61), mit einem System (10) nach einem der vorhergehenden Ansprüche.

11. Fahrzeug (60) nach Anspruch 10, wobei das Fahrzeug (60) ein Fahrzeugsteuergerät (20) umfasst, das eine erste Datenschnittstelle (16d) umfasst, die eine CAN-Busschnittstelle (19) ist, und das Fahrzeugsteuergerät (20) eingerichtet ist, Drehmomentsollwerte (24) an das mindestens eine Elektromotorsteuergerät (14) über die erste Datenschnittstelle (16d) des Fahrzeugsteuergeräts (20) an die erste Datenschnittstelle (16a, 16b) des Motorsteuergeräts (14) zu senden, und eingerichtet ist, Drehmomentsollwerte (24) an das Bremssteuergerät (12) über die erste Datenschnittstelle (16d) des Fahrzeugsteuergeräts (20) an die erste Datenschnittstelle (16c) des Bremssteuergeräts (12) zu senden.

12. Fahrzeug (60) nach Anspruch 10 oder 11, wobei das Fahrzeug (60) für jedes der Antriebsräder (64) jeweils einen elektrischen Antrieb (18) aufweist.

## Claims

1. A system (10) for an electrically driven vehicle (60), the system (10) comprising:
- at least one motor control device (14) for controlling a plurality of electric motors (18) by means of which at least one drive wheel (64) of the vehicle (60) can be driven and
- at least one brake control device (12) for controlling friction brakes (58) by means of which one of a plurality of drive wheels (64) and/or non-driven wheels (66) can be braked,
the brake control device (12) and the electric motor control device (14) each having a data interface (16a, 16b, 16c) that is a CAN bus interface (19), and the brake control device (12) and the electric motor control device (14) being designed to transmit and/or receive data via the first data interface (16a, 16b, 16c) at a predefined maximum data transfer rate (23),
the brake control device (12) and the electric motor control device (14) each having a second data interface (38a, 38b, 38c), each second data interface (38a, 38b, 38c) being designed to transmit and/or receive data at a higher data transfer rate (35) than the maximum data transfer rate (23) of the first data interface (16a, 16b, 16c), and
the brake control device (12) and the electric motor control device (14) being designed to exchange data with one another, in particular by transmitting and/or receiving data, via the second data interface (38a, 38b, 38c), at a higher data transfer rate (35) than with the first data interfaces (16a, 16b, 16c),
**characterized in that** the brake control device (12) is designed to transmit the differential torques (44) via its second data interface (38a) to the second data interface (38b, 38c) of the electric motor control device (14), and the electric motor control device (14) is designed to superpose the differential torques (44) received via the second data interface (38b, 38c) from the second data interface (38a) of the brake control device (12) with the or in each case the current torque target value (24) of the particular electric motor (18) that can be received via the first data interface (16d) from a vehicle control device (20).

2. The system (10) according to claim 1, wherein the at least one motor control device (14) is designed to determine, preferably continuously or in intervals, a maximum currently available positive and/or negative torque value (41) of each of the electric motors (18) and to transmit said value via the second data interface (38b, 38c) to the second data interface (38a) of the brake control device (12).

3. The system (10) according to either of the preceding claims, wherein the brake control device (12) comprises at least one safety system (34) which is designed to generate, in particular upon activation (72) of the safety system (34), target torques (42) for at least one of the wheels (62) of the vehicle (60) or all of the wheels (62) of the vehicle (60), and the brake control device (12) is designed to derive differential torques (44) from the target torques (42) for each of the electric motors (18).

4. The system (10) according to claim 3, wherein the safety system (34) comprises a traction control system (43) and/or an anti-lock braking system (45) and/or an electronic stability program (51).

5. The system (10) according to any of the preceding claims, wherein the brake control device (12) is designed to limit the differential torque(s) (44) for each of the electric motors (18) depending on the or the particular maximum currently available positive and/or negative torque value (41).

6. The system (10) according to any of the preceding claims, wherein the brake control device (12) is designed to generate differential torques (44) with a negative torque value (29) or positive torque value (27).

7. The system (10) according to any of the preceding claims, wherein the brake control device (12) is designed, in the event of a limited differential torque (44) for each of the electric motors (18), to generate brake torques (28) for controlling the friction brakes (30) of the drive wheels (64), wherein a brake torque (28) for a drive wheel (64) consists in particular of a difference (53) between the target torque (42) for the particular drive wheel (64) and the limited differential torque (44) for an electric motor (18) of the particular drive wheel (64).

8. The system (10) according to any of the preceding claims, wherein the electric motor control device (14) has a superposition member (47), in particular an adder (47), wherein the superposition member (47) is designed to superpose, in particular by adding, a differential torque value (44) with a torque target value (24) for each of the electric motors (18).

9. The system (10) according to any of the preceding claims, wherein the safety system (34) is designed to be activated when a slip value (31) of at least one wheel (62) above a predefined threshold value (33) is detected, in order to reduce the slip value (31) without interaction with a vehicle control device (20) or other control devices.

10. A vehicle (60), in particular a utility vehicle (61) such as a truck (61), comprising a system (10) according to any of the preceding claims.

11. The vehicle (60) according to claim 10, wherein the vehicle (60) comprises a vehicle control device (20) comprising a first data interface (16d) that is a CAN bus interface (19), and the vehicle control device (20) is designed to transmit torque target values (24) to the at least one electric motor control device (14) via the first data interface (16d) of the vehicle control device (20) to the first data interface (16a, 16b) of the motor control device (14), and is designed to transmit torque target values (24) to the brake control device (12) via the first data interface (16d) of the vehicle control device (20) to the first data interface (16c) of the brake control device (12).

12. The vehicle (60) according to either claim 10 or claim 11, wherein the vehicle (60) has an electric drive (18) for each of the drive wheels (64).

## Revendications

1. Système (10) pour un véhicule (60) à entraînement électrique, le système (10) comprenant :
- au moins un appareil de commande de moteur (14) pour la commande de plusieurs moteurs électriques (18) avec lequel au moins une roue d'entraînement (64) du véhicule (60) peut être entraînée et
- au moins un appareil de commande de freinage (12) pour la commande de freins à friction (58) avec lesquels respectivement l'une parmi plusieurs roues d'entraînement (64) et/ou roues sans entraînement (66) peut être freinée,
dans lequel l'appareil de commande de freinage (12) et l'appareil de commande de moteur électrique (14) présentent respectivement une interface de données (16a, 16b, 16c) qui est une interface de bus CAN (19), et l'appareil de commande de freinage (12) et l'appareil de commande de moteur électrique (14) sont configurés pour émettre et/ou recevoir, par l'intermédiaire de la première interface de données (16a, 16b, 16c), des données à un débit de transmission de données maximal (23) prédéfini,
l'appareil de commande de freinage (12) et l'appareil de commande de moteur électrique (14) présentent respectivement une seconde interface de données (38a, 38b, 38c), la seconde interface de données (38a, 38b, 38c) étant respectivement réalisée pour émettre et/ou recevoir des données à un débit de transmission de données (35) plus élevé que le débit de transmission de données maximal (23) de la première interface de données (16a, 16b, 16c) et
l'appareil de commande de freinage (12) et l'appareil de commande de moteur électrique (14) sont configurés pour échanger des données l'un avec l'autre par l'intermédiaire de la seconde interface de donnée (38a, 38b, 38c) à un débit de transmission de données (35) supérieur à celui avec les premières interfaces de données (16a, 16b, 16c), en particulier par l'envoi et/ou la réception de données.
**caractérisé en ce que** l'appareil de commande de freinage (12) est configuré pour transmettre les couples différentiels (44) à la seconde interface de données (38b, 38c) de l'appareil de commande de moteur électrique (14) par l'intermédiaire de sa seconde interface de données (38a) et l'appareil de commande de moteur électrique (14) est configuré pour superposer les couples différentiels (44) reçus par l'intermédiaire de la seconde interface de données (38b, 38c) en provenance de la seconde interface de données (38a) de l'appareil de commande de freinage (12) à la ou à respectivement la valeur de couple de consigne actuelle (24) du moteur électrique respectif (18) pouvant être reçue par l'intermédiaire de la première interface de données (16d) en provenance d'un appareil de commande de véhicule (20).

2. Système (10) selon la revendication 1, dans lequel l'au moins un appareil de commande de moteur (14) est configuré pour déterminer une valeur de couple (41) positive et/ou négative maximale actuellement disponible de chacun des moteurs électriques (18) et pour la transmettre à la seconde interface de données (38a) de l'appareil de commande de freinage (12) par l'intermédiaire de la seconde interface de données (38b, 38c), de préférence en continu ou par intervalles.

3. Système (10) selon l'une des revendications précédentes, dans lequel l'appareil de commande de freinage (12) comprend au moins un système de sécurité (34) configuré pour générer, en particulier lors d'une activation (72) du système de sécurité (34), respectivement des couples de consigne (42) pour au moins l'une des roues (62) du véhicule (60) ou toutes les roues (62) du véhicule (60), et l'appareil de commande de freinage (12) est configuré pour dériver respectivement des couples différentiels (44) à partir des couples de consigne (42) pour chacun des moteurs électriques (18).

4. Système (10) selon la revendication 3, dans lequel le système de sécurité (34) comprend une régulation antipatinage (43) et/ou un système antiblocage (45) et/ou un programme de stabilité électronique (51).

5. Système (10) selon l'une des revendications précédentes, dans lequel l'appareil de commande de freinage (12) est configuré pour limiter le ou les couples différentiels (44) pour chacun des moteurs électriques (18) en fonction de la ou de respectivement la valeur de couple (41) positive et/ou négative maximale actuellement disponible.

6. Système (10) selon l'une des revendications précédentes, dans lequel l'appareil de commande de freinage (12) est configuré pour générer des couples différentiels (44) comportant une valeur de couple négative (29) ou une valeur de couple positive (27).

7. Système (10) selon l'une quelconque des revendications précédentes, dans lequel l'appareil de commande de freinage (12) est configuré pour générer, dans le cas d'un couple différentiel limité (44) pour chacun des moteurs électriques (18), des couples de freinage (28) pour la commande des freins à friction (30) des roues d'entraînement (64), un couple de freinage (28) pour une roue d'entraînement (64) étant constitué en particulier d'une différence (53) entre le couple de consigne (42) pour la roue d'entraînement (64) respective et le couple différentiel limité (44) pour un moteur électrique (18) de la roue d'entraînement (64) respective.

8. Système (10) selon l'une des revendications précédentes, dans lequel l'appareil de commande de moteur électrique (14) présente un élément de superposition (47), en particulier un élément d'addition (47), l'élément de superposition (47) étant configuré pour superposer respectivement une valeur de couple différentiel (44) avec une valeur de consigne de couple (24), en particulier par addition, pour les moteurs électriques (18).

9. Système (10) selon l'une des revendications précédentes, dans lequel le système de sécurité (34) est configuré pour être activé lors de la détection d'une valeur de glissement (31) d'au moins une roue (62) au-dessus d'une valeur seuil prédéfinie (33) pour la réduction de la valeur de glissement (31) sans interaction avec un appareil de commande de véhicule (20) ou d'autres appareils de commande.

10. Véhicule (60), en particulier véhicule utilitaire (61), tel qu'un camion (61), comportant un système (10) selon l'une des revendications précédentes.

11. Véhicule (60) selon la revendication 10, dans lequel le véhicule (60) comprend un appareil de commande de véhicule (20) comprenant une première interface de données (16d), laquelle est une interface de bus CAN (19), et l'appareil de commande de véhicule (20) est configuré pour envoyer des valeurs de consigne de couple (24) à l'au moins un appareil de commande de moteur électrique (14) à la première interface de données (16a, 16b) de l'appareil de commande de moteur (14) par l'intermédiaire de la première interface de données (16d) de l'appareil de commande de véhicule (20), et est configuré pour envoyer des valeurs de consigne de couple (24) à l'appareil de commande de freinage (12) à la première interface de données (16c) de l'appareil de commande de freinage (12) par l'intermédiaire de la première interface de données (16d) de l'appareil de commande de véhicule (20).

12. Véhicule (60) selon la revendication 10 ou 11, dans lequel le véhicule (60) présente respectivement un entraînement électrique (18) pour chacune des roues d'entraînement (64).
